# EUROPEAN PATENT SPECIFICATION

(11) **EP 1 189 787 B1**
(45) Date of publication and mention of the grant of the patent: **19.01.2005**
(21) Application number: 00941652.0
(22) Date of filing: 22.06.2000
(51) Int. Cl.: B60R 21/01, G01G 19/414

(54) **WEIGHT SENSOR ASSEMBLY FOR DETERMINING SEAT OCCUPANT WEIGHT**
SENSOR ZUR BESTIMMUNG DES INSASSENGEWICHTES
ENSEMBLE CAPTEUR DE POIDS PERMETTANT DE DETERMINER LE POIDS DE L'OCCUPANT D'UN SIEGE

(30) Priority: 25.06.1999 US 141105 P
(43) Date of publication of application: 27.03.2002
(73) Proprietor: Siemens VDO Automotive Corporation, Auburn Hills, Michigan 48326-2980 (US)
(72) Inventor: CURTIS, Brian, M., Lake Orion, MI 48359 (US)
(74) Representative: Payne, Janice Julia
(86) International application number: PCT/US2000/017237
(87) International publication number: WO 2001/000454

(56) References cited:
- US-A- 6 039 344
- "WEIGHT SENSING FOR OCCUPANT RESTRAINT UTILIZING LOAD CELL TECHNOLOGIES" RESEARCH DISCLOSURE,GB,INDUSTRIAL OPPORTUNITIES LTD. HAVANT, no. 399, 1 July 1997 (1997-07-01), page 442 XP000726567 ISSN: 0374-4353

## Description

### BACKGROUND OF THE INVENTION

### 1. Field of the Invention.

This invention relates to an apparatus for measuring the weight of a seat occupant. Specifically, a sensor arrangement is mounted to a seat frame member to provide seat occupant weight measurements.

### 2. Related Art.

Most vehicles include airbags and seatbelt restraint systems that work together to protect the driver and passengers from experiencing serious injuries due to a high speed collision. It is important to control the deployment force of the airbags and the force of the seatbelt pre-tensioners based on the size of the driver or the passenger. One way to control these forces is to monitor the weight of the seat occupant. If a smaller person such as a child or infant in a car seat is in the front passenger seat, the weight on the seat will be less than if an adult occupies the seat.

Current systems for measuring the weight of a seat occupant are complex and expensive. One type of system uses pressure sensitive foil mats mounted within the seat bottom foam. Another system uses sensors placed at a plurality of locations within the seat bottom cushion. The combined output from the mats or the sensors is used to determine the weight of the seat occupant. These sensors experience a substantially vertical force, due to the weight of the seat occupant, but are also subject to longitudinal and lateral forces caused by acceleration, deceleration, or turning. The lateral and longitudinal forces picked up by the sensor incorporate an error component into the weight measurement. The sensors are very sophisticated using multiple strain gages and complicated bending elements to provide high measurement sensitivity in the vertical direction and low sensitivity to lateral and longitudinal forces in order to increase accuracy.

Mounting these sensors within the seat bottom can also be difficult and time consuming. It is difficult to find mounting locations for each the sensors that will accommodate all of the various positions of a seated occupant while still providing accurate measurements. Further, shifting of the occupant on the seat can dislodge or move the sensors out of their proper location. Because the sensors are mounted within the seat bottom, it is difficult to reposition the sensors after the seat is installed in the vehicle.

Research disclosure, p 442, July 1997 XP-000726567 on which the preamble of claim 1 is based, describes weight sensing for occupant restraint systems using load cell technologies.

EP 0534226 describes a strain sensor using a strain gauge unit.

US 5822707 describes an automatic seat adjustment system for a motor vehicle.

Thus, it is desirable to have a simplified seat occupant weight measurement system that is accurate and easily to install and overcomes the above references deficiencies with prior art systems.

### SUMMARY OF THE INVENTION

In accordance with the present invention a system for measuring the weight of an occupant seated on a vehicle seat comprises a seat element mounted to a vehicle structure; a seat support member for supporting a seat bottom; and a plurality of weight sensor assemblies mounted between said seat element and said seat support member characterized in that each of said weight sensor assemblies has a bottom surface and a top surface with a full bridge strain gauge mounted on one of said top or bottom surfaces and wherein each of said sensor assemblies includes a central bendable portion with at least one groove formed in one of said top or bottom surfaces that extends at least partially along the width of said sensor assembly to localize strain in said central bendable portion.

In a disclosed embodiment of this invention, a system for measuring the weight of an occupant seated on a vehicle seat includes a seat element mounted to a vehicle structure and a seat support member for supporting a seat bottom. A plurality of weight sensor assemblies are mounted between the seat element and the seat support member. Each of the weight sensor assemblies has a bottom surface and a top surface with a full bridge strain gage mounted on one of the surfaces.

Each weight sensor assembly has a first end mounted to the seat element, such as a seat riser, and a second end mounted to the seat support member, such as a seat frame or track member, with a central bendable portion extending between the first and second ends. The strain gages each generate a weight signal in response to measuring deflection of the central bendable portion for the respective sensor assembly. A central processor determines the seat occupant weight based on the weight signals. An airbag control module communicates with the processor to control deployment force of an airbag based on seat occupant weight.

Each of the sensors includes at least one groove formed in one of the top or bottom surfaces. The groove extends at least partially along the width of the sensor to localize strain in the central bendable portion. The strain gage is placed on the other of the top or bottom surfaces, facing opposite from the groove.

The subject invention provides a simplified seat occupant weight measurement system that is inexpensive, accurate, and easily to install. These and other features of the present invention can be best understood from the following specification and drawings, the following of which is a brief description.

### BRIEF DESCRIPTION OF THE DRAWINGS

Figure 1 is an environmental view of a seat occupant seated in a vehicle having an airbag system.
Figure 2 is an exploded view of a seat assembly incorporating the subject weight measurement system.
Figure 5 is a schematic diagram of the control system incorporating the subject weight measurement system.
Figure 6A is a top perspective view of a preferred embodiment of a sensor assembly.
Figure 6B is a bottom perspective view of the sensor assembly of Figure 6A.
Figure 6C is a cross-section view of the sensor assembly taken along 6C-6C of Figure 6A.
Figure 7 is an alternate embodiment of a weight sensor.

### DETAILED DESCRIPTION OF AN EXEMPLARY EMBODIMENT

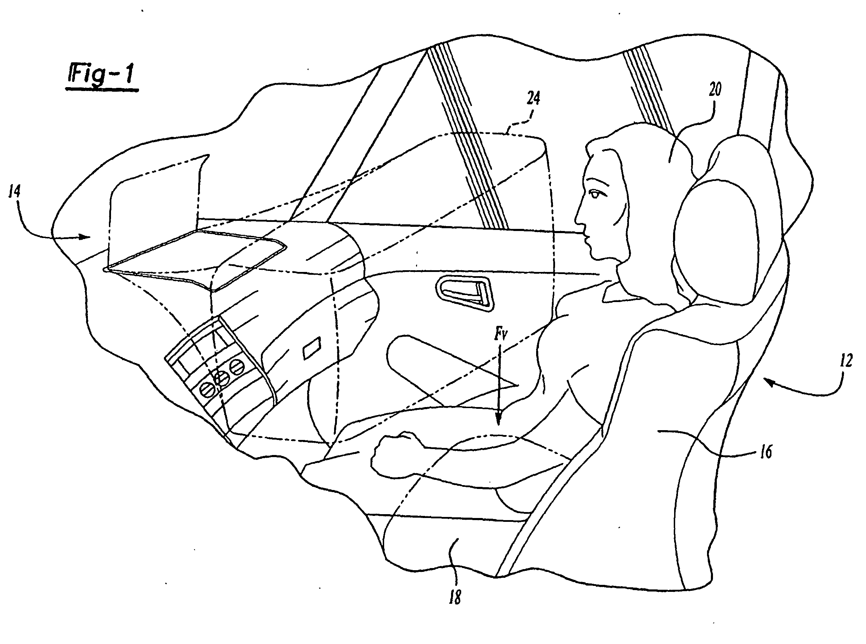

A vehicle includes a vehicle seat assembly, shown generally at 12 in Figure 1, and an airbag system 14. The seat assembly 12 can be either a driver or passenger seat and includes a seat back 16 and a seat bottom 18. When a vehicle occupant 20 is seated on the seat 12 a vertical force Fv is exerted against the seat bottom 18. The vertical force Fv represents the weight of the seat occupant 20.

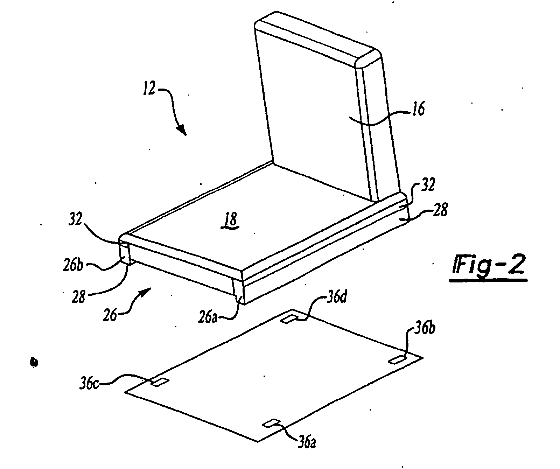

The airbag system 14 deploys an airbag 24 under certain collision conditions. The deployment force for the airbag 24, shown in dashed lines in Figure 1, varies according to the weight of the occupant 20. The vehicle includes a unique system for measuring the weight of the seat occupant 20. This unique system is integrated into a seat frame or track member, generally indicated at 26 in Figure 2.

The seat 12 is preferably mounted to a a vehicle structure 30 on an inboard track assembly 26a and an outboard track assembly 26b that is spaced apart from the inboard track assembly 26a by a predetermined distance. Both the inboard 26a and outboard 26b track assemblies include first 28 and second 32 track members. The first track member 28 is typically mounted to a seat riser 34 or directly to the vehicle structure 30, such as a floor. The second track member 32 is mounted for sliding movement relative to the first track member 28 so that seat 12 position can be adjusted forwardly and rearwardly within the vehicle to a desired position.

A plurality of sensor assemblies 36 are mounted between the first track members 28 of the inboard 26a and outboard 26b track assemblies and the riser 34. In the preferred embodiment, four (4) sensor assemblies 36 are used with a first sensor assembly 36a positioned near the front of the inboard track assembly 26a, a second sensor assembly 36b positioned near the rear of the inboard track assembly 26a, a third sensor assembly 36c positioned near the front of the outboard track assembly 26b, and a fourth sensor assembly 36d positioned near the rear of the outboard track assembly 26b.

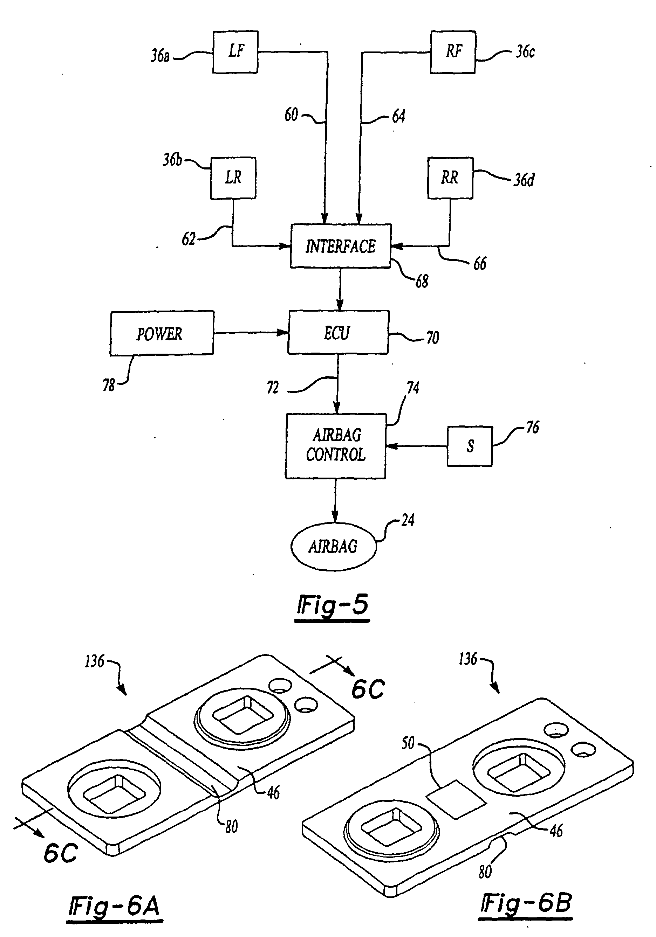

Preferably, each sensor assembly 36a, 36b, 36c, and 36d has a first end 40 mounted to the first track member 28 with at least one fastener 42 and a second end 44 mounted to the riser 34 with at least one fastener 42, as shown in Figure 3. It should be understood that any type of fastener can be used and that other joining methods known in the art can also be used to mount the sensors 36. A central bendable portion 46 extends between the first 40 and second 44 ends of the sensor assembly 36. As the vertical force Fv of the seat occupant 20 is exerted on the seat bottom 18, the central bendable portion 46 of each sensor assembly 36a, 36b, 36c, 36d deflects or bends into an S-shaped configuration putting one portion of the sensor 36 in compression and another portion in tension.

A strain gage 50 is mounted to each of the sensors 36a, 36b, 36c, 36d to measure the amount of bending in the central portion 46. The sensors 36 have a top surface facing the seat bottom 18 and a bottom surface facing the riser. Preferably, a combination of four (4) strain gages, forming a full bridge, are mounted on one of the top or bottom surfaces to measure the bending. The four strain gages are thus combined to serve as a Wheatstone Bridge for measuring deflection. The operation of a Wheatstone Bridge is well known in the art.

The strain gage 50 is mounted on the top surface of the sensor 36. A first aperture is formed at the first end of the sensor 36 and a second aperture is formed at the second end of the sensor 36 for receiving the fasteners 42. The strain gage 50 is positioned between the apertures on the top surface. In order to achieve more accurate readings, full-bridge strain gage 50 should have all strain gage components mounted on only one surface of the sensor 36. In other words, if the strain gage 50 is mounted on the top surface then no strain gage components should be mounted on the bottom surface or if the gage 50 is mounted on the bottom surface then no strain gage components should be mounted on the top surface.

The sensors 36a, 36b, 36c, 36d each generate a signal representative of the occupant weight that causes bending at the respective location of the sensors 36a, 36b, 36c, 36d, see Figure 5. Thus, the first sensor 36a generates a first signal 60, the second sensor 36b generates a second signal 62, the third sensor 36c generates a third signal 64, and the fourth sensor 36d generates a fourth signal 66. The signals 60, 62, 64, 66 are transmitted to a common interface unit 68 and are then fed into a central processor unit or electronic control unit (ECU) 70 as is known in the art. The ECU 70 combines the signals 60, 62, 64, 66 to determine the weight of the occupant 20. The ECU 70 then sends a control signal 72 to a system controller 74. Preferably, the system controller 74 is an airbag control module that is in communication with the ECU 70 such that the deployment force of the airbag 24 is controlled based on seat occupant weight. The system controller 70 could also be used to control the force of seat belt pretensioners based on occupant weight. A vehicle crash sensor 76 also supplies information to the airbag control module 74 that is used in preparation for the control instructions for the airbag 24. The system utilizes a power supply 78 as is known in the art.

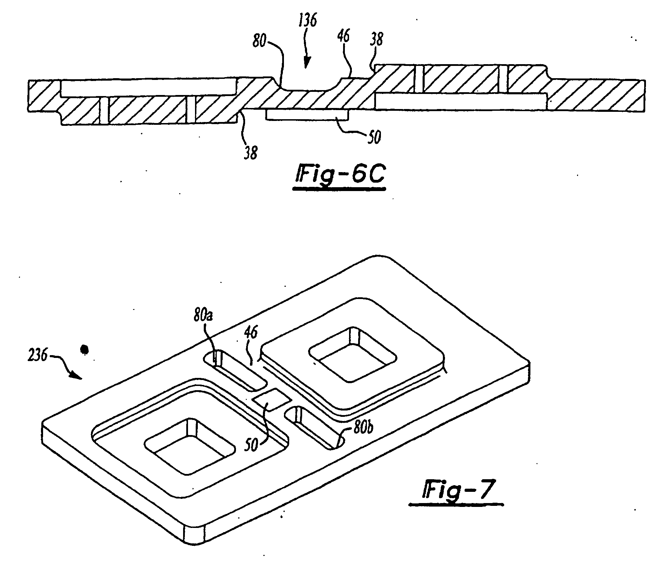

A preferred embodiment of a weight sensor 136 is shown in Figures 6A-6C. In this preferred embodiment each of the sensor assemblies 136a, 136b, 136c, 136d includes at least one groove 80 formed in one of the top 52 or bottom 54 surfaces of the sensor 36. The groove 80 extends at least partially along the width of the sensor assembly 36 to localize strain in the central bendable portion 46. The full bridge strain gage 50 is placed the opposing surface, facing an opposite direction from the groove 80, see Figure 6B. In this embodiment, the groove 80 extends across the entire with of the sensor 36.

In an alternate embodiment of a weight sensor 236, shown in Figure 7, a pair of grooves 80a, 80b are formed in one of the top 52 or bottom 54 surfaces to localize strain in the central bendable portion 46. The grooves 80a, 80b are spaced apart from one another and only extend partially across the width of the sensor 36. In this embodiment, the strain gage 50 is mounted between the grooves 80a, 80b.

The subject invention offers a simplified system for measuring the weight of a seat occupant 20. It is preferable to integrate the sensors 36 between the track 28 and the riser 34 because they are common components for most vehicle seats 12. The subject weight measurement system is easily incorporated into any type of seat configuration. The measured weight is independent of seat position and is accurately provided in various occupant positions on the seat 12.

By measuring the deflection in all four (4) locations in the inboard 26a and outboard 26b track assemblies, it is possible to calculate the occupant weight, which is proportional to the sum of the output of all of the sensors 36a, 36b, 36c, 36d. The electronics for signal conditioning and the interface 68 can be housed within the track assemblies 26a, 26b as is well known in the art.

Although a preferred embodiment of this invention has been disclosed, it should be understood that a worker of ordinary skill in the art would recognize many modifications come within the scope of this invention. For that reason, the following claims should be studied to determine the true scope and content of this invention.

## Claims

1. A system for measuring the weight of an occupant seated on a vehicle seat comprising:
a seat element (12) mounted to a vehicle structure (30);
a seat support member for supporting a seat bottom (18); and
a plurality of weight sensor assemblies (36) mounted between said seat element and said seat support member **characterised in that** each of said weight sensor assemblies has a bottom surface (52) and a top surface (54) with a full bridge strain gage mounted on one of said top or bottom surfaces and wherein each of said sensor assemblies includes a central bendable portion (46) with at least one groove (80) formed in one of said top (52) or bottom (54) surfaces that extends at least partially along the width of said sensor assembly (36) to localize strain in said central bendable portion (46).

2. A system according to claim 1 wherein said full bridge strain gage is mounted to said bottom surface (52).

3. A system according to claim 1 wherein said seat element includes a seat riser (34) that is mounted to a vehicle floor.

4. A system according to claim 3 wherein said seat support member is a seat track member (28) fixed to said riser.

5. A system according to claim 4 wherein each of said sensor assemblies (36) has a first end (40) fixed to said seat track and a second end (44) fixed to said riser with said central bendable portion (46) extending between said first and second ends.

6. A system according to claim 5 wherein said full bridge stain gage is mounted on said central bendable portion (46).

7. A system according to claim 1 wherein said full bridge strain gage is mounted on the other of said top or bottom surfaces, facing opposite from said groove (80).

8. A system according to claim 1 wherein each of said sensor assemblies (36) generates a weight signal representing a portion of the weight of a seat occupant that is transmitted to a central processing unit to determine seat occupant weight.

9. A system according to claim 8 including an airbag control module in communication with said processor (70) wherein deployment force of an airbag (24) is controlled by said control module based on seat occupant weight.

10. A system according to claim 9 wherein said seat support member comprises a seat track assembly including an inboard track assembly (26a) and an outboard track assembly (26b) spaced apart from each other, said inboard and outboard track assemblies each having a first track (28) mounted to said seat element and a second track (32) mounted for movement relative to said first track and wherein said plurality of weight sensor assemblies comprises a first weight sensor (36a) positioned near a forward portion of said inboard track assembly, a second weight sensor (36b) positioned near a rearward portion of said inboard track assembly, a third weight sensor (36c) positioned near a forward portion of said outboard track assembly, and a fourth weight sensor (36d) positioned near a rearward portion of said outboard track assembly, each of said first, second, third, and fourth weight sensors having a first end (40) fixed to said first track and a second end (44) fixed to said seat element with said central bendable portion (46) extending between said first and second ends.

## Patentansprüche

1. System zum Messen des Gewichtes eines auf einem Fahrzeugsitz sitzenden Benutzers mit
einem Sitzelement (12) das an einer Fahrzeugkonstruktion (30) montiert ist;
einem Sitzlagerelement zum Lagern eines Sitzbodens (18); und
einer Vielzahl von Gewichtssensoreinheiten (36), die zwischen dem Sitzelement und dem Sitzlagerelement montiert sind, **dadurch gekennzeichnet, daß** jede der GEwichtssensoreinheiten eine Bodenfläche (52) und eine Deckfläche (54) mit einer auf einer der Deck- oder Bodenflächen montierten Vollbrücken-Dehnungsmeßstreifeneinrichtung besitzt, wobei jede der Sensoreinheiten einen zentralen biegbaren Abschnitt (46) aufweist und mindestens eine Nut (80) in einer der Deck- oder Bodenflächen (52, 54) ausgebildet ist, die sich zumindest teilweise entlang der Breite der Sensoreinheiten (36) erstreckt, um die Dehnung im zentralen biegbaren Abschnitt (46) zu lokalisieren.

2. System nach Anspruch 1, bei dem die Vollbrücken-Dehnungsmeßstreifeneinrichtung an der Bodenfläche (52) montiert ist.

3. System nach Anspruch 1, bei dem das Sitzelement einen Sitzheber (34) aufweist, der an einem Fahrzeugboden montiert ist.

4. System nach Anspruch 3, bei dem das Sitzlagerelement ein Sitzschienenelement (28) ist, das am Sitzheber fixiert ist.

5. System nach Anspruch 4, bei dem jede der Sensoreinheiten (36) ein erstes Ende (40), das in der Sitzschiene fixiert ist, und ein zweites Ende (44) aufweist, das am Sitzheber fixiert ist, wobei sich der zentrale biegbare Abschnitt (46) zwischen dem ersten und zweiten Ende erstreckt.

6. System nach Anspruch 5, bei dem die Vollbrücken-Dehnungsmeßstreifeneinrichtung am zentralen biegbaren Abschnitt (46) montiert ist.

7. System nach Anspruch 1, bei dem die Vollbrücken-Dehnungsmeßstreifeneinrichtung an der anderen Fläche der Deck- und Bodenfläche montiert ist, die von der Nut (80) weg weist.

8. System nach Anspruch 1, bei dem jede der Sensoreinheiten (36) ein Gewichtssignal erzeugt, das einen Teil des Gewichtes eines Sitzbenutzers repräsentiert und einer zentralen Signalverarbeitungseinheit zugeführt wird, um das Gewicht des Sitzbenutzers zu ermitteln.

9. System nach Anspruch 8, das einen Airbagsteuermodul in Verbindung mit dem Prozessor (70) aufweist, wobei die Entfaltungskraft des Airbags (24) vom Steuermodul auf der Basis des Gewichtes des Sitzbenutzers gesteuert wird.

10. System nach Anspruch 9, bei dem das Sitzlagerelement eine Sitzschieneneinheit aufweist, die eine Innenschieneneinheit (26a) und eine Außenschieneneinheit (26b) umfaßt, welche im Abstand voneinander angeordnet sind, wobei die Innenschieneneinheit und Außenschieneneinheit jeweils eine erste Schiene (28), die am Sitzelement montiert ist, und eine zweite Schiene (32), die zur Durchführung einer Bewegung relativ zur ersten Schiene montiert ist, besitzen und wobei die Vielzahl der Gewichtssensoreinheiten einen ersten Gewichtssensor (36a), der in der Nähe eines Vorderabschnittes der Innenschieneneinheit angeordnet ist, einen zweiten Gewichtssensor (32b), der in der Nähe eines hinteren Abschnittes der Innenschieneneinheit angeordnet ist, einen dritten Gewichtssensor (36C), der in der Nähe eines Vorderabschnittes der Außenschieneneinheit angeordnet ist, und einen vierten Gewichtssensor (36d), der in der Nähe eines hinteren Abschnittes der Außenschieneneinheit angeordnet ist, aufweist, wobei jeder der ersten, zweiten, dritten und vierten Gewichtssensoren ein erstes Ende (40), das an der ersten Schiene fixiert ist, und ein zweites Ende (44), das am Sitzelement fixiert ist, umfaßt und wobei sich der zentrale biegbare Abschnitt (46) zwischen dem ersten und zweiten Ende erstreckt.

## Revendications

1. Système pour mesurer le poids d'un occupant assis sur un siège de véhicule comportant :
un élément (12) de siège monté sur une structure (30) de véhicule;
un élément de support de siège pour supporter un fond (18) de siège; et
une pluralité d'assemblages (36) formant capteurs de poids montés entre l'éléments de siège et l'élément de support de siège, **caractérisé en ce que** chaque assemblage formant capteurs de poids a une surface (52) de fond et une surface (54) de dessus avec une jauge de contrainte à pont complet montée sur l'une des surfaces de dessus ou de fond et dans lequel chaque assemblage formant capteurs comporte une partie (46) centrale pouvant être courbée, avec au moins une rainure (80) formée dans l'une des surfaces de dessus (52) ou de fond (54), qui s'étend au moins partiellement le long de la largeur de l'assemblage (36) formant capteur pour localiser la contrainte dans la partie (46) centrale pouvant être courbée.

2. Système suivant la revendication 1, dans lequel la jauge de contrainte à pont complet est montée sur la surface (52) de fond.

3. Système suivant la revendication 1, dans lequel l'élément de siège comporte un dispositif (34) d'élévation de siège qui est monté sur un plancher de véhicule.

4. Système suivant la revendication 3, dans lequel l'élément de support de siège est un élément (28) de rail de siège fixé au dispositif d'élévation.

5. Système suivant la revendication 4, dans lequel chaque assemblage (36) formant capteurs comporte une première extrémité (40) fixée au rail de siège et une deuxième extrémité (44) fixée au dispositif d'élévation avec la partie (46) centrale pouvant être courbée s'étendant entre les premières et deuxièmes extrémités.

6. Système suivant la revendication 5, dans lequel la jauge de contrainte à pont complet est montée sur la partie (46) centrale pouvant être courbée.

7. Système suivant la revendication 1, dans lequel la jauge de contrainte à pont complet est montée sur l'autre des surfaces de dessus ou de fond, faisant face à la rainure (80).

8. Système suivant la revendication 1, dans lequel chaque assemblage (36) formant capteurs produit un signal de poids représentant une partie du poids d'un occupant de siège qui est transmis à une unité de traitement centrale pour déterminer le poids de l'occupant du siège.

9. Système suivant la revendication 8, comportant un module de commande d'airbag en communication avec le processeur (70), dans lequel la force de déploiement d'un airbag (24) est commandée par le module de commande sur la base du poids de l'occupant du siège.

10. Système suivant la revendication 9, dans lequel l'élément de support de siège comporte un assemblage de rails de siège incluant un assemblage (26a) de rails intérieurs et un assemblage (26b) de rails extérieurs à distance l'un de l'autre, les assemblages de rails intérieurs et extérieurs ayant chacun un premier rail (28) monté sur l'élément de siège et un deuxième rail (32) monté pour un mouvement relatif par rapport au premier rail, et dans lequel la pluralité d'assemblages formant capteurs de poids comporte un premier capteur (36a) de poids positionné à proximité d'une partie avant de l'assemblage de rails intérieurs, un deuxième capteur (36b) de poids positionné à proximité d'une partie arrière de l'assemblage de rails intérieurs, un troisième capteur (36c) de poids positionné à proximité d'une partie avant de l'assemblage de raits extérieurs, et un quatrième capteur (36d) de poids positionné à proximité d'une partie arrière de l'assemblage de rails extérieurs, chaque capteur des premier, deuxième, troisième et quatrième capteurs de poids ayant une première extrémité (40) fixée au premier rail et une deuxième extrémité (44) fixée à l'élément de siège, la partie (46) centrale pouvant être courbée s'étendant entre les première et deuxième extrémités.
